# EUROPÄISCHE PATENTSCHRIFT

(11) **EP 4 220 097 B1**
(45) Veröffentlichungstag und Bekanntmachung des Hinweises auf die Patenterteilung: **03.01.2024**
(21) Anmeldenummer: 22154436.4
(22) Anmeldetag: 01.02.2022
(51) Int. Cl.: G01F 1/66, G01F 1/667, G01F 15/18, G01P 5/24

(54) **DURCHFLUSSMESSSYSTEM**
FLOW MEASURING SYSTEM
SYSTÈME DE MESURE DE DÉBIT

(43) Veröffentlichungstag der Anmeldung: 02.08.2023
(73) Patentinhaber: SICK Engineering GmbH, 01458 Ottendorf-Okrilla (DE)
(72) Erfinder: Schröter, Gerry, 01239 Dresden (DE); Künzelmann, Mario, 01187 Dresden (DE); Starke, Eric, 01796 Pirna (DE); Schulz, Christian, 01187 Dresden (DE)
(74) Vertreter: Manitz Finsterwald Patent- und Rechtsanwaltspartnerschaft mbB

(56) Entgegenhaltungen:
- CN-A- 107 167 194
- CN-A- 108 871 478
- US-A1- 2018 321 067
- US-A1- 2020 386 595

## Beschreibung

Die vorliegende Erfindung betrifft ein Durchflussmesssystem zur Messung eines Fluiddurchflusses in einer Hochdruckleitung, umfassend einen Messkörper, der einen Einlassflansch, einen Auslassflansch und einen Fluidkanal aufweist, wobei sich der Fluidkanal zwischen dem Einlassflansch und dem Auslassflansch erstreckt und eine Kanalachse aufweist, eine in den Messkörper integrierte Ultraschallmessvorrichtung und einen stromaufwärts der Ultraschallmessvorrichtung in dem Fluidkanal angeordneten Strömungsgleichrichter.

In vielen Bereichen der Technik sind Messungen an strömenden Fluiden, d. h. Gasen oder Flüssigkeiten, durchzuführen. Beispielsweise können Strömungsgeschwindigkeiten von strömenden Fluiden in Rohrleitungen oder Kanälen mittels Ultraschallmesstechnik nach dem Differenzlaufzeitverfahren ermittelt werden. Eine entsprechende Ultraschallmessvorrichtung und ein entsprechendes Verfahren sind beispielsweise in der DE 10 2016 112 295 A1 beschrieben. Auf der Grundlage der Strömungsgeschwindigkeit und der Querschnittsfläche der Rohrleitung oder des Kanals kann der Volumenstrom des durch die Rohrleitung strömenden Fluids ermittelt werden. Derartige Volumenstrom-Messvorrichtungen werden häufig in Form von Zählern eingesetzt, um Liefer- und/oder Verbrauchsmengen von Gasen oder Flüssigkeiten zu ermitteln.

Bei solchen Messungen ist allgemein ein möglichst gleichmäßiges Strömungsprofil erwünscht, um eine hohe Messgenauigkeit zu gewährleisten. In der Praxis liegen jedoch häufig inhomogene oder gestörte Strömungsprofile vor. Diese können durch einen Strömungsgleichrichter wieder in Richtung ungestörter Strömungen konditioniert werden. Bekannte Strömungsgleichrichter können Platten, Bleche, Gitter, Innenrohre und dergleichen aufweisen.

Die CN 108 871 478 A offenbart ein Durchflussmesssystem mit einem Strömungsgleichrichter, der eine Wabenstruktur sowie zwei Ultraschallmessvorrichtungen mit V-förmigen Messpfaden aufweist.

In der US 2018/321067 A1 ist ein Durchflussmesssystem mit mehreren gegeneinander verkippten Ultraschall-Messpfaden offenbart. Die Messpfade können zusätzlich axial zueinander versetzt sein.

Die US 2020/0386595 A1 offenbart ein Durchflussmesssystem mit zwei bezüglich des Strömungsquerschnitts zueinander versetzten Messpfaden.

Häufig ist wegen einer gewünschten Austauschbarkeit von Messgeräten eine bestimmte Einbaulänge für den Messkörper vorgegeben. Eine gängige Vorgabe ist beispielsweise das Dreifache der Nennweite des Fluidkanals. Der Strömungsgleichrichter beansprucht je nach Leistungsfähigkeit einen relativ großen Anteil der axialen Länge des Messkörpers. Weiterhin weist auch die Ultraschallmessvorrichtung eine relativ große axiale Länge auf, insbesondere wenn eine hohe Messgenauigkeit gefordert ist. Aus diesen Gründen ist es oft schwierig, eine vorgegebene Einbaulänge einzuhalten.

Es ist eine Aufgabe der Erfindung, ein hochdrucktaugliches Durchflussmesssystem anzugeben, welches eine hohe Messgenauigkeit und eine große Toleranz gegenüber gestörten Strömungsprofilen aufweist und dennoch mit einer relativ kurzen Einbaulänge ausgeführt werden kann.

Die Lösung der Aufgabe erfolgt durch ein Durchflussmesssystem mit den Merkmalen des Anspruchs 1.

Erfindungsgemäß ist an dem Auslassflansch eine Anordnung von Bohrungen für Befestigungsmittel vorgesehen und durch die Länge der Bohrungen (vorzugsweise insbesondere der Länge einer gegebenenfalls vorhandenen längsten Bohrung) ist ein sich axial erstreckender Auslass-Befestigungsbereich des Messkörpers definiert, wobei die Ultraschallmessvorrichtung wenigstens zwei Reflexions-Messpfade aufweist, wobei jeder der Reflexions-Messpfade durch einen ersten Ultraschallwandler, einen Reflektor und einen zweiten Ultraschallwandler aufgespannt ist und sich derart in einer Messebene durch den Fluidkanal erstreckt, dass der zweite Ultraschallwandler stromabwärts des ersten Ultraschallwandlers angeordnet ist, wobei jeder der stromabwärts gelegenen zweiten Ultraschallwandler in dem Auslass-Befestigungsbereich angeordnet ist oder in diesen hineinragt.

Das Vorsehen eines Reflexions-Messpfads, also eines "gefalteten" Messpfads, ermöglicht auf geringem Bauraum das Bereitstellen einer Messstrecke mit ausreichender Erstreckung in Strömungsrichtung. Der Auslass-Befestigungsbereich beansprucht einen Anteil der axialen Länge des Messkörpers, wobei die Bohrungen insbesondere für Hochdruckanwendungen vergleichsweise tief sein sollten.

Dadurch dass jeder der stromabwärts gelegenen Ultraschallwandler in dem Auslass-Befestigungsbereich angeordnet ist oder in diesen hineinragt, überlappen der für die Bohrungen vorgesehene Bereich und der für die Ultraschallmessvorrichtung vorgesehene Bereich, so dass sich eine Verringerung der axialen Gesamtausdehnung des Messkörpers ergibt. Dementsprechend kann der Strömungsgleichrichter bei vorgegebener Gesamtlänge relativ lang ausgeführt werden, um die Störungsfestigkeit zu verbessern. Ein erfindungsgemäßes Durchflussmesssystem ist somit in der Lage, trotz geringer Einbaulänge auch bei Vorliegen von gestörten Strömungsprofilen eine relativ hohe Messgenauigkeit bereitzustellen.

Vorzugsweise ist auch an dem Einlassflansch eine Anordnung von Bohrungen für Befestigungsmittel vorgesehen. Über die Flansche mit den Bohrungen kann der Messkörper druckfest in ein Fluidfördersystem oder dergleichen eingebaut werden.

Der Auslass-Befestigungsbereich weist im Allgemeinen eine scheibenartige Form auf. Der stromabwärts gelegene zweite Ultraschallwandler kann zumindest teilweise innerhalb des Auslass-Befestigungsbereichs zwischen zwei benachbarten Bohrungen angeordnet sein. Ebenso kann sich ein Kabelkanal, der sich von der Oberfläche des Messkörpers bis zum stromabwärts gelegenen zweiten Ultraschallwandler erstreckt, zumindest abschnittsweise zwischen zwei benachbarten Bohrungen befinden.

Das Aufspannen eines Reflexions-Messpfads wird insbesondere durch die Ausrichtung des Reflektors erzielt, die so gewählt ist, dass ein von dem ersten Ultraschallwandler oder von dem zweiten Ultraschallwandler ausgesendetes Ultraschallsignal nach einer Reflexion am Reflektor auf den anderen Ultraschallwandler gelenkt wird. Es muss sich bei dem ersten Ultraschallwandler nicht zwingend um einen Sender und bei dem zweiten Ultraschallwandler nicht zwingend um einen Empfänger handeln. Vielmehr kann die Signalrichtung auch umgekehrt oder bidirektional sein.

Erfindungsgemäß weist die Ultraschallmessvorrichtung wenigstens zwei Reflexions-Messpfade auf, wobei jeder der Reflexions-Messpfade durch einen ersten Ultraschallwandler, einen Reflektor und einen zweiten Ultraschallwandler aufgespannt ist und sich derart in einer Messebene durch den Fluidkanal erstreckt, dass der zweite Ultraschallwandler stromabwärts des ersten Ultraschallwandlers angeordnet ist. Hierdurch können besonders robuste Ultraschallmessungen durchgeführt werden. Außerdem ergibt sich die Möglichkeit, eine Notlauffunktion bereitzustellen. Wenn einer der Reflexions-Messpfade ausfällt, kann das Gerät mittels des anderen Reflexions-Messpfads weitermessen. Vorzugsweise ist das Durchflussmesssystem dazu ausgebildet, in diesem Fall ein entsprechendes Warnsignal auszugeben. Aus Platzgründen ist vorgesehen, dass jeder der stromabwärts gelegenen zweiten Ultraschallwandler in dem Auslass-Befestigungsbereich angeordnet ist oder in diesen hineinragt.

Gemäß einer Ausführungsform der Erfindung ist wenigstens eine der Messebenen und vorzugsweise jede der Messebenen ausgehend von einer parallel zur Kanalachse verlaufenden Ausrichtung um eine Lotgerade des zugehörigen Reflektors verkippt. Aufgrund dieser Verkippung beansprucht die Messebene nur einen geringen axialen Bauraum. Ferner ist der Querschnitt des Fluidkanals besser durch Messstrecken abgedeckt.

Die Verkippung ist vorzugsweise ausreichend stark, dass sich eine nennenswerte axiale Platzersparnis ergibt, die Messstrecke aber andererseits eine ausreichende Komponente in Strömungsrichtung aufweist. Eine spezielle Ausführungsform der Erfindung sieht vor, dass der Kippwinkel einen Betrag von wenigstens 5° und höchstens 60°, bevorzugt von wenigstens 15° und höchstens 45° und besonders bevorzugt von wenigstens 25° und höchstens 35°, aufweist.

Die Messebenen der Reflexions-Messpfade können in entgegengesetzten Richtungen verkippt sein, vorzugsweise um betragsmäßig gleiche Kippwinkel. Dies ermöglicht eine besonders platzsparende Konstruktion. Die Lotgerade kann quer zur Kanalachse verlaufen. D. h. die Lotgerade kann rechtwinklig zur Kanalachse verlaufen, muss diese aber nicht unbedingt schneiden. Die wenigstens zwei Reflexions-Messpfade können so gestaltet sein, dass die Reflektoren zumindest in einer axialen Schnittebene gesehen einander gegenüberliegen.

Eine weitere Ausführungsform der Erfindung sieht vor, dass die Lotgerade in einer Querschnittsebene des Fluidkanals gesehen versetzt zur Kanalachse angeordnet ist. D. h. der Reflexions-Messpfad kann außermittig angeordnet sein. Insbesondere können die Lotgeraden der Reflektoren zweier Reflexions-Messpfade in entgegengesetzten Richtungen versetzt zur Kanalachse angeordnet sein, vorzugsweise um den gleichen Versatz. Auf diese Weise wird der Querschnitt des Fluidkanals relativ gleichmäßig von Messstrecken der Ultraschallmessvorrichtung abgedeckt, was besonders genaue und robuste Messungen ermöglicht.

Bevorzugt weist der Messkörper eine Länge auf, die höchstens das Dreifache des Durchmessers des Fluidkanals beträgt. Eine derartige Längenbeschränkung des Messkörpers ermöglicht die Verwendung eines erfindungsgemäßen Durchflussmesssystems in vielfältigen gängigen Systemen. Bei einem Fluidkanal mit variierendem Durchmesser ist unter dem Durchmesser des Fluidkanals der minimale Durchmesser, der maximale Durchmesser oder der mittlere Durchmesser zu verstehen.

Der Strömungsgleichrichter ist vorzugsweise wenigstens dreistufig ausgeführt. Es hat sich gezeigt, dass in vielen Anwendungsbereichen mit relativ stark gestörten Strömungsprofilen zu rechnen ist, so dass nur ein Strömungsgleichrichter mit mindestens drei Stufen in der Lage ist, eine ausreichende Konditionierung zu bewerkstelligen.

Eine spezielle Ausgestaltung der Erfindung sieht vor, dass der Strömungsgleichrichter wenigstens einen Nabenkörper umfasst, der bezüglich der Kanalachse rotationssymmetrisch ist und einen gewölbten Anströmbereich aufweist, und/oder dass der Strömungsgleichrichter wenigstens einen Spearman-Gleichrichter, einen Wabenkörper, ein Innenrohr und/oder eine Lochplatte umfasst. Derartige Strömungsgleichrichter haben sich als besonders leistungsfähig erwiesen. Eine besonders bevorzugte Ausgestaltung sieht eine Anordnung aus einem Nabenkörper, einem Spearman-Gleichrichter und einer Lochplatte als Strömungsgleichrichter vor. Der Strömungsgleichrichter kann wenigstens einen Nabenkörper umfassen, welcher wie in der europäischen Anmeldung 20203266.0, eingereicht am 22. Oktober 2020, gestaltet ist.

Eine weitere Ausführungsform der Erfindung sieht vor, dass jeder Reflexions-Messpfad einen Reflexionswinkel von wenigstens 5° und höchstens 45°, vorzugsweise von wenigstens 10° und höchstens 30°, aufweist. Es hat sich gezeigt, dass sich bei solchen Reflexionswinkeln auf minimaler axialer Länge ein ausreichend gut auswertbares Messignal ergibt.

Eine weitere Ausführungsform der Erfindung sieht vor, dass jeder Reflexions-Messpfad vollständig außerhalb eines Umgebungsbereichs der Kanalachse angeordnet ist, das heißt insbesondere nicht die Kanalachse berührt. Ein Sekanten-Pfad ist strömungstechnisch günstiger als ein Mittelpfad. Insbesondere kann die Abdeckung des Kanalquerschnitts optimiert werden.

Vorzugsweise ist der Messkörper aus Stahl gefertigt und/oder einstückig. Dies gewährleistet eine besonders stabile Ausführung und ermöglicht insbesondere die Verwendung des Durchflussmesssystems in Hochdruckanwendungen. Insbesondere kann der Messkörper für einen Fluiddruck von wenigstens 0,5 bar und/oder höchstens 110 bar ausgelegt sein.

Der Einlassflansch und/oder der Auslassflansch kann eine Nennweite zwischen 40 mm und 200 mm aufweisen. D. h. es ist bevorzugt, dass das erfindungsgemäße Durchflussmesssystem für kleine und mittlere Nennweiten geeignet ist. Gemäß einer weiteren Ausführungsform der Erfindung sind an dem Auslassflansch und vorzugsweise auch an dem Einlassflansch wenigstens acht und vorzugsweise genau acht um den Fluidkanal verteilt angeordnete Bohrungen für Befestigungsmittel vorgesehen. Dies ermöglicht eine hochdrucksichere Anbindung des Messkörpers an ein Leitungssystem.

Weiterbildungen der Erfindung sind auch den abhängigen Ansprüchen, der Beschreibung sowie den beigefügten Zeichnungen zu entnehmen.
- Fig. 1: zeigt ein erfindungsgemäßes Durchflussmesssystem in einer Perspektivansicht.
- Fig. 2: zeigt einen Strömungsgleichrichter und eine Ultraschallmessvorrichtung des in Fig. 1 gezeigten Durchflussmesssystems.
- Fig. 3: ist eine teilweise aufgeschnittene Seitenansicht des in Fig. 1 gezeigten Durchflussmesssystems.
- Fig. 4: ist eine teilweise aufgeschnittene Draufsicht auf das in Fig. 1 gezeigte Durchflussmesssystem.
- Fig. 5: ist eine Hinteransicht des in Fig. 1 gezeigten Durchflussmesssystems.

Das in den Figuren gezeigte, gemäß einer Ausführungsform der Erfindung gestaltete Durchflussmesssystem 11 umfasst einen aus Stahl gefertigten und vorzugsweise einstückigen Messkörper 13, in dem ein Fluidkanal 15 in Form einer zentralen Durchführung ausgebildet ist. Bei dem dargestellten Ausführungsbeispiel weist der Fluidkanal 15 einen kreisrunden Querschnitt auf. Der Fluidkanal 15 ist geradlinig und definiert eine Kanalachse 22.

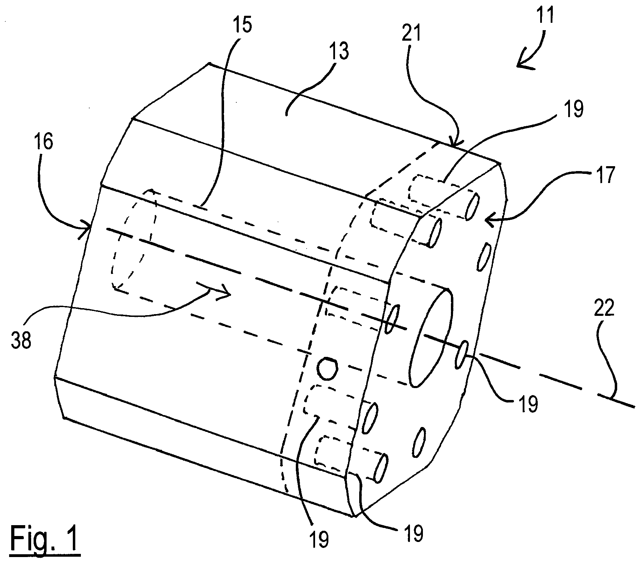

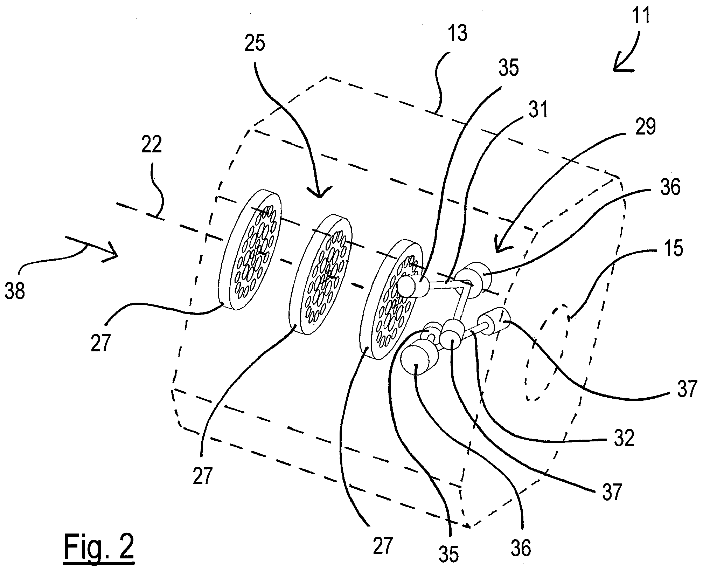

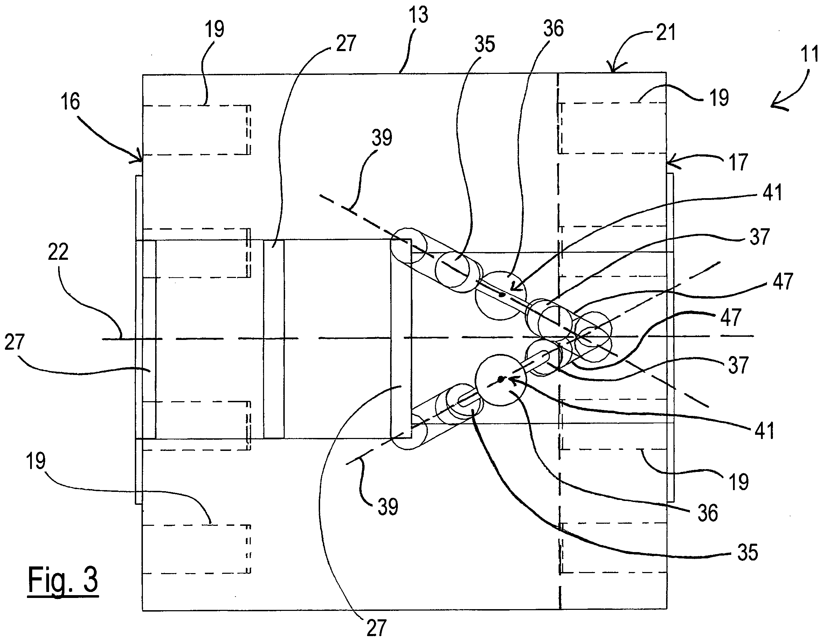

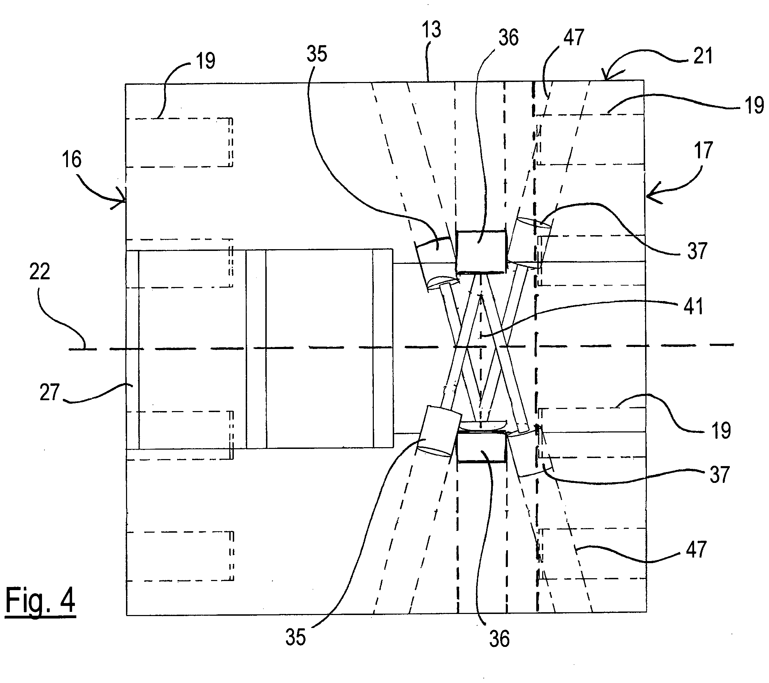

Für den Einbau in ein nicht dargestelltes Fluidleitungssystem weist der Messkörper 13 einen Einlassflansch 16 und einen Auslassflansch 17 auf. Der Einlassflansch 16 und der Auslassflansch 17 können wie dargestellt eben sein und parallel zueinander verlaufen. An dem Auslassflansch 17 ist eine Anordnung von acht Bohrungen 19 für Befestigungsmittel wie Schrauben vorgesehen. Durch die maximale, vorzugsweise einheitliche Länge der mit Gewinden versehenen Bohrungen 19 ist ein sich axial erstreckender, scheibenartiger Auslass-Befestigungsbereich 21 des Messkörpers 13 definiert. Auch an dem Einlassflansch 16 ist eine Anordnung von acht Bohrungen 19 vorgesehen, wie in den Fig. 3 und 4 erkennbar ist. Zur besseren Übersichtlichkeit wurden die an dem Einlassflansch 16 vorgesehenen Bohrungen in den Fig. 1 und 2 weggelassen.

Wie in Fig. 2 erkennbar ist in dem Fluidkanal 15 ein Strömungsgleichrichter 25 angeordnet. Der Strömungsgleichrichter 25 ist dreistufig ausgeführt, wobei in Fig. 2 beispielhaft drei Lochplatten 27 als Stufen gezeigt sind. Wenigstens eine Stufe und vorzugsweise genau eine Stufe des Strömungsgleichrichters 25 könnte jedoch als Nabenkörper ausgeführt sein, der bezüglich der Kanalachse 22 rotationssymmetrisch ist und einen gewölbten Anströmbereich aufweist. Weiterhin könnten einzelne oder alle Stufen des Strömungsgleichrichters 25 als Spearman-Gleichrichter, Wabenkörper oder Innenrohr ausgeführt sein.

Stromabwärts des Strömungsgleichrichters 25 ist eine Ultraschallmessvorrichtung 29 in dem Messkörper 13 angeordnet. Die Ultraschallmessvorrichtung 29 weist zwei Reflexions-Messpfade 31, 32 auf, die jeweils durch einen ersten Ultraschallwandler 35, einen Reflektor 36 und einen zweiten Ultraschallwandler 37 aufgespannt sind. Die Reflexions-Messpfade 31, 32 erstrecken sich gemäß dem Reflexionsgesetz in jeweiligen Messebenen durch den Fluidkanal 15. Hierbei ist jeweils der zweite Ultraschallwandler 37 bezüglich einer festgelegten Strömungsrichtung 38 stromabwärts des ersten Ultraschallwandlers 35 angeordnet. Die ersten Ultraschallwandler 35 und die zweiten Ultraschallwandler 37 stehen mit einer nicht dargestellten elektronischen Steuereinrichtung in Signalverbindung, welche dazu ausgebildet ist, mittels des bekannten Laufzeitverfahrens unter Berücksichtigung des Doppler-Effekts den Fluiddurchfluss durch den Fluidkanal 15 basierend auf den Sensorsignalen zu bestimmen. Bei den ersten Ultraschallwandlern 35 und den zweiten Ultraschallwandlern 37 kann es sich grundsätzlich um Sender-/Empfänger-Kombinationen handeln, das heißt die Reflexions-Messpfade 31, 32 können für eine bidirektionale Signalübertragung vorgesehen sein.

Damit die Reflexions-Messpfade 31, 32 einerseits eine axiale Komponente aufweisen und andererseits nur eine geringe axiale Länge beanspruchen, verlaufen die Verbindungslinien 39 (Fig. 3), die sich zwischen dem ersten Ultraschallwandler 35 und dem zweiten Ultraschallwandler 37 erstrecken, schräg zur Kanalachse 22, wie insbesondere in Fig. 3 erkennbar ist. Insbesondere sind die Messebenen ausgehend von einer parallel zur Kanalachse 2 verlaufenden Ausrichtung um jeweilige Lotgeraden 41 der Reflektoren 36 verkippt, und zwar um betragsmäßig gleiche Kippwinkel in entgegengesetzten Richtungen. Der Kippwinkel beträgt bei dem dargestellten Ausführungsbeispiel jeweils etwa 29°.

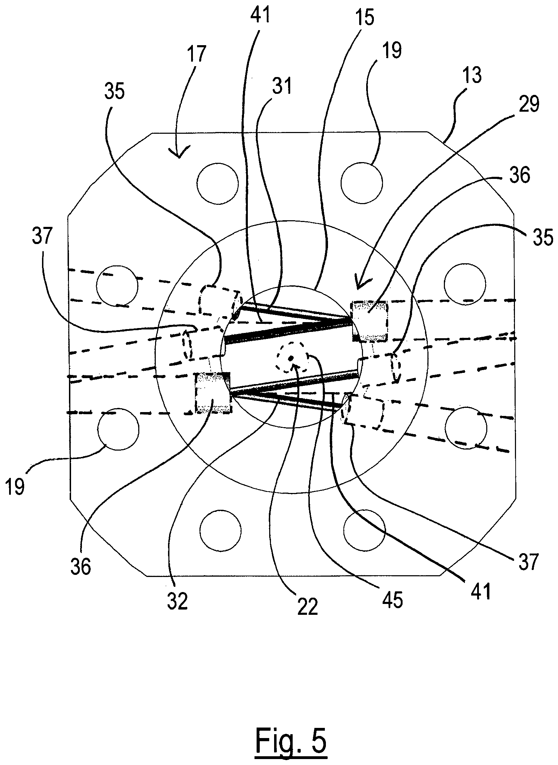

Den Fig. 4 und 5 lässt sich entnehmen, dass die Lotgeraden 41 der Reflektoren 36 jeweils rechtwinklig zur Kanalachse 22 verlaufen. Sie sind aber wie in Fig. 5 erkennbar versetzt zur Kanalachse 22 angeordnet. Insbesondere sind die Lotgeraden 41 der Reflektoren 36 in entgegengesetzten Richtungen um den gleichen Versatz von der Kanalachse 22 beabstandet. Ein Umgebungsbereich 45 der Kanalachse 22 ist hierbei ausgespart. Der Reflexionswinkel beträgt für beide Reflexions-Messpfade 31, 32 etwa 17°.

Wie in den Fig. 3 und 4 erkennbar ist, ragen die beiden stromabwärts gelegenen zweiten Ultraschallwandler 37 in den Auslass-Befestigungsbereich 21 hinein. Die den zweiten Ultraschallwandlern 37 zugeordneten Kabelkanäle 47 sind hierbei jeweils zwischen zwei Bohrungen 19 durch den Auslass-Befestigungsbereich 21 hindurchgeführt. D. h. der von der Ultraschallmessvorrichtung 29 beanspruchte axiale Bauraum überlappt in axialer Richtung mit dem Auslass-Befestigungsbereich 21. Dadurch kann die axiale Baulänge des Messkörpers 13 reduziert werden.

Da aufgrund der Anordnung der Reflexions-Messpfade 31, 32 ein relativ großer Bereich des Querschnitts des Fluidkanals 15 messtechnisch abgedeckt ist, ist die Ultraschallmessung besonders zuverlässig. Es hat sich gezeigt, dass mit einem erfindungsgemäßen Durchflussmesssystem 11 selbst dann zuverlässige und störungstolerante Messungen möglich sind, wenn der Einlassflansch 16 und der Auslassflansch 17 hochdrucktauglich ausgeführt sind und der Messkörper 13 eine Länge aufweist, die höchstens das Dreifache des Durchmessers des Fluidkanals 15 beträgt.

Grundsätzlich könnte die Ultraschallmessvorrichtung 29 auch mehr als zwei Reflexions-Messpfade 31, 32 umfassen. Außerdem könnte der Strömungsgleichrichter 25 auch beispielsweise einstufig, zweistufig, vierstufig oder fünfstufig ausgeführt sein. Zudem könnte ein Messpfad vorgesehen sein, der als Mittelpfad die Kanalachse 22 schneidet. Ferner könnten Reflexions-Messpfade mit unterschiedlichen Reflexionswinkeln und/oder unterschiedlichen Kippwinkeln vorgesehen sein.

### Bezugszeichenliste

- 11: Durchflussmesssystem
- 13: Messkörper
- 15: Fluidkanal
- 16: Einlassflansch
- 17: Auslassflansch
- 19: Bohrung
- 21: Auslass-Befestigungsbereich
- 22: Kanalachse
- 25: Strömungsgleichrichter
- 27: Lochplatte
- 29: Ultraschallmessvorrichtung
- 31: Reflexions-Messpfad
- 32: Reflexions-Messpfad
- 35: erster Ultraschallwandler
- 36: Reflektor
- 37: zweiter Ultraschallwandler
- 39: Verbindungslinie
- 41: Lotgerade
- 45: Umgebungsbereich
- 47: Kabelkanal

## Patentansprüche

1. Durchflussmesssystem (11) zur Messung eines Fluiddurchflusses in einer Hochdruckleitung, umfassend:
einen Messkörper (13), der einen Einlassflansch (16), einen Auslassflansch (17) und einen Fluidkanal (15) aufweist, wobei sich der Fluidkanal (15) zwischen dem Einlassflansch (16) und dem Auslassflansch (17) erstreckt und
eine Kanalachse (22) aufweist,
eine in den Messkörper (13) integrierte Ultraschallmessvorrichtung (29) und
einen stromaufwärts der Ultraschallmessvorrichtung (29) in dem Fluidkanal (15) angeordneten Strömungsgleichrichter (25),
wobei an dem Auslassflansch (17) eine Anordnung von Bohrungen (19) für Befestigungsmittel vorgesehen ist und durch die Länge der Bohrungen (19) ein sich axial erstreckender Auslass-Befestigungsbereich (21) des Messkörpers (13) definiert ist,
wobei die Ultraschallmessvorrichtung (29) wenigstens zwei Reflexions-Messpfade (31, 32) aufweist, wobei jeder der Reflexions-Messpfade (31, 32) durch einen ersten Ultraschallwandler (35), einen Reflektor (36) und einen zweiten Ultraschallwandler (37) aufgespannt ist und sich derart in einer Mess-Ebene durch den Fluidkanal (15) erstreckt, dass der zweite Ultraschallwandler (37) stromabwärts des ersten Ultraschallwandlers (35) angeordnet ist,
**dadurch gekennzeichnet, dass**
jeder der stromabwärts gelegenen zweiten Ultraschallwandler (37) in dem Auslass-Befestigungsbereich (21) angeordnet ist oder in diesen hineinragt.

2. Durchflussmesssystem nach Anspruch 1,
wobei in einer der Mess-Ebenen und vorzugsweise in jeder der Mess-Ebenen eine sich zwischen dem ersten Ultraschallwandler (35) und dem zweiten Ultraschallwandler (37) erstreckende Verbindungslinie (39) schräg zur Kanalachse (22) verläuft.

3. Durchflussmesssystem nach Anspruch 1 oder 2,
wobei wenigstens eine der Mess-Ebenen und vorzugsweise jede der Mess-Ebenen ausgehend von einer parallel zur Kanalachse (22) verlaufenden Ausrichtung um eine Lotgerade (41) des zugehörigen Reflektors (36) verkippt ist.

4. Durchflussmesssystem nach Anspruch 3,
wobei der Kippwinkel einen Betrag von wenigstens 5° und höchstens 60°, bevorzugt von wenigstens 15° und höchstens 45° und besonders bevorzugt von wenigstens 25° und höchstens 35° aufweist.

5. Durchflussmesssystem nach Anspruch 3 oder 4,
wobei die Mess-Ebenen der Reflexions-Messpfade (31, 32) in entgegengesetzten Richtungen verkippt sind, vorzugsweise um betragsmäßig gleiche Kippwinkel.

6. Durchflussmesssystem nach einem der Ansprüche 3 bis 5,
wobei die Lotgerade (41) in einer Querschnittsebene des Fluidkanals (15) gesehen versetzt zur Kanalachse (22) angeordnet ist.

7. Durchflussmesssystem nach einem der vorstehenden Ansprüche,
wobei der Messkörper (13) eine Länge aufweist, die höchstens das Dreifache des Durchmessers des Fluidkanals (15) beträgt.

8. Durchflussmesssystem nach einem der vorstehenden Ansprüche, wobei der Strömungsgleichrichter (25) wenigstens dreistufig ausgeführt ist.

9. Durchflussmesssystem nach einem der vorstehenden Ansprüche,
wobei der Strömungsgleichrichter (25) wenigstens einen Nabenkörper umfasst, der bezüglich der Kanalachse (22) rotationssymmetrisch ist und einen gewölbten Anströmbereich aufweist,
und/oder wobei der Strömungsgleichrichter (25) wenigstens einen Spearman-Gleichrichter, einen Wabenkörper, ein Innenrohr und/oder eine Lochplatte (27) umfasst.

10. Durchflussmesssystem nach einem der vorstehenden Ansprüche, wobei jeder Reflexions-Messpfad (31, 32) einen Reflexionswinkel von wenigstens 5° und höchstens 45°, vorzugsweise von wenigstens 10° und höchstens 30°, aufweist.

11. Durchflussmesssystem nach einem der vorstehenden Ansprüche, wobei jeder Reflexions-Messpfad (31, 32) vollständig außerhalb eines Umgebungsbereichs (45) der Kanalachse (22) angeordnet ist.

12. Durchflussmesssystem nach einem der vorstehenden Ansprüche, wobei der Messkörper (13) aus Stahl gefertigt und/oder einstückig ist.

13. Durchflussmesssystem nach einem der vorstehenden Ansprüche, wobei der Messkörper (13) für einen Fluiddruck von wenigstens 0,5 bar und/oder höchstens 110 bar ausgelegt ist.

14. Durchflussmesssystem nach einem der vorstehenden Ansprüche, wobei an dem Auslassflansch (17) und vorzugsweise auch an dem Einlassflansch (16) wenigstens acht und vorzugsweise genau acht um den Fluidkanal (15) verteilt angeordnete Bohrungen (19) für Befestigungsmittel vorgesehen sind.

## Claims

1. A throughflow measurement system (11) for measuring a fluid throughflow in a high pressure line, comprising:
a measurement body (13) which has an inlet flange (16), an outlet flange (17) and a fluid passage (15), wherein the fluid passage (15) extends between the inlet flange (16) and the outlet flange (17) and has a passage axis (22);
an ultrasonic measurement apparatus (29) integrated into the measurement body (13); and
a flow conditioner (25) arranged upstream of the ultrasonic measurement apparatus (29) in the fluid passage (15),
wherein an arrangement of bores (19) for fastening means is provided at the outlet flange (17) and an axially extending outlet fastening region (21) of the measurement body (13) is defined by the length of the bores (19),
wherein the ultrasonic measurement apparatus (29) comprises at least two reflection measurement paths (31, 32), wherein each of the reflection measurement paths (31, 32) is spanned by a first ultrasonic transducer (35),
a reflector (36) and a second ultrasonic transducer (37) and extends in a measurement plane through the fluid passage (15) such that the second ultrasonic transducer (37) is arranged downstream of the first ultrasonic transducer (35),
**characterized in that**
each of the second ultrasonic transducers (37) disposed downstream is arranged in the outlet fastening region (21) or projects into it.

2. A throughflow measurement system according to claim 1,
wherein, in one of the measurement planes, and preferably in each of the measurement planes, a connection line (39) extending between the first ultrasonic transducer (35) and the second ultrasonic transducer (37) extends obliquely to the passage axis (22).

3. A throughflow measurement system according to claim 1 or 2,
wherein at least one of the measurement planes, and preferably each of the measurement planes, is tilted about a perpendicular line (41) of the associated reflector (36), starting from an alignment extending in parallel with the passage axis (22).

4. A throughflow measurement system according to claim 3,
wherein the tilt angle has a magnitude of at least 5° and at most 60°, preferably of at least 15° and at most 45°, and particularly preferably of at least 25° and at most 35°.

5. A throughflow measurement system according to claim 3 or 4,
wherein the measurement planes of the reflection measurement paths (31, 32) are tilted in opposite directions, preferably by tilt angles of equal magnitude.

6. A throughflow measurement system according to any one of the claims 3 to 5,
wherein the perpendicular line (41) is arranged offset from the passage axis (22), viewed in a cross-sectional plane of the fluid passage (15).

7. A throughflow measurement system according to any one of the preceding claims,
wherein the measurement body (13) has a length which amounts to at most three times the diameter of the fluid passage (15).

8. A throughflow measurement system according to any one of the preceding claims,
wherein the flow conditioner (25) is designed with at least three stages.

9. A throughflow measurement system according to any one of the preceding claims,
wherein the flow conditioner (25) has at least one hub body which is rotationally symmetrical with respect to the passage axis (22) and which has an arched onflow region,
and/or wherein the flow conditioner (25) comprises at least one Spearman rectifier, a honeycomb body, an inner tube and/or a perforated plate (27).

10. A throughflow measurement system according to any one of the preceding claims,
wherein each reflection measurement path (31, 32) has a reflection angle of at least 5° and at most 45°, preferably of at least 10° and at most 30°.

11. A throughflow measurement system according to any one of the preceding claims,
wherein each reflection measurement path (31, 32) is arranged completely outside a surrounding region (45) of the passage axis (22).

12. A throughflow measurement system according to any one of the preceding claims,
wherein the measurement body (13) is produced from steel and/or is formed in one piece.

13. A throughflow measurement system according to any one of the preceding claims,
wherein the measurement body (13) is adapted for a fluid pressure of at least 0.5 bar and/or at most 110 bar.

14. A throughflow measurement system according to any one of the preceding claims,
wherein at least eight bores (19), and preferably exactly eight bores (19), for fastening means are provided at the outlet flange (17) and preferably also at the inlet flange (16), said bores (19) being arranged distributed around the fluid passage (15).

## Revendications

1. Système de mesure de débit (15) pour mesurer un débit de fluide dans une conduite à haute pression, comprenant :
un corps de mesure (13) qui présente une bride d'entrée (16), une bride de sortie (17) et un canal à fluide (15), le canal à fluide (15) s'étendant entre la bride d'entrée (16) et la bride de sortie (17) et présentant un axe de canal (22),
un dispositif de mesure à ultrasons (29) intégré dans le corps de mesure (13), et un redresseur de flux (25) disposé dans le canal à fluide (15) en amont du dispositif de mesure à ultrasons (29),
dans lequel
un ensemble de trous (19) pour des moyens de fixation est prévu sur la bride de sortie (17), et une zone de fixation de sortie (21) du corps de mesure (13) s'étendant axialement est définie par la longueur des trous (19), le dispositif de mesure à ultrasons (29) comprend au moins deux trajets de mesure par réflexion (31, 32),
chacun des trajets de mesure par réflexion (31, 32) est défini par un premier transducteur à ultrasons (35), un réflecteur (36) et un deuxième transducteur à ultrasons (37), et s'étend dans un plan de mesure à travers le canal à fluide (15) de telle sorte que le deuxième transducteur à ultrasons (37) est disposé en aval du premier transducteur à ultrasons (35),
**caractérisé en ce que**
chacun des deuxièmes transducteurs à ultrasons (37) situés en aval est disposé dans la zone de fixation de sortie (21) ou pénètre dans celle-ci.

2. Système de mesure de débit selon la revendication 1,
dans lequel, dans l'un des plans de mesure et de préférence dans chacun des plans de mesure, une ligne de jonction (39) s'étendant entre le premier transducteur à ultrasons (35) et le deuxième transducteur à ultrasons (37) s'étend en oblique par rapport à l'axe de canal (22).

3. Système de mesure de débit selon la revendication 1 ou 2,
dans lequel l'un au moins des plans de mesure et de préférence chacun des plans de mesure est incliné autour d'une droite perpendiculaire (41) du réflecteur (36) correspondant, à partir d'une orientation parallèle à l'axe de canal (22).

4. Système de mesure de débit selon la revendication 3,
dans lequel l'angle d'inclinaison présente une valeur de 5° au minimum et de 60° au maximum, de préférence de 15° au minimum et de 45° au maximum, et de manière particulièrement préférée de 25° au minimum et de 35° au maximum.

5. Système de mesure de débit selon la revendication 3 ou 4,
dans lequel les plans de mesure des trajets de mesure par réflexion (31, 32) sont inclinés dans des directions opposées, de préférence selon des angles d'inclinaison égaux en valeur absolue.

6. Système de mesure de débit selon l'une des revendications 3 à 5,
dans lequel la droite perpendiculaire (41) est décalée par rapport à l'axe de canal (22), vue dans un plan en coupe transversale du canal à fluide (15).

7. Système de mesure de débit selon l'une des revendications précédentes, dans lequel le corps de mesure (13) présente une longueur qui est au plus égale à trois fois le diamètre du canal à fluide (15).

8. Système de mesure de débit selon l'une des revendications précédentes, dans lequel le redresseur de flux (25) est au moins à trois étages.

9. Système de mesure de débit selon l'une des revendications précédentes, dans lequel le redresseur de flux (25) comprend au moins un corps de moyeu qui est à symétrie de révolution par rapport à l'axe de canal (22) et qui présente une zone d'attaque bombée,
et/ou le redresseur de flux (25) comprend au moins un redresseur de Spearman, un corps en nid d'abeilles, un tube intérieur et/ou une plaque perforée (27).

10. Système de mesure de débit selon l'une des revendications précédentes, dans lequel chaque trajet de mesure par réflexion (31, 32) présente un angle de réflexion de 5° au minimum et de 45° au maximum, de préférence de 10° au minimum et de 30° au maximum.

11. Système de mesure de débit selon l'une des revendications précédentes, dans lequel chaque trajet de mesure par réflexion (31, 32) est disposé entièrement à l'extérieur d'une zone environnante (45) de l'axe de canal (22).

12. Système de mesure de débit selon l'une des revendications précédentes, dans lequel le corps de mesure (13) est fabriqué en acier et/ou est d'une seule pièce.

13. Système de mesure de débit selon l'une des revendications précédentes, dans lequel le corps de mesure (13) est conçu pour une pression de fluide de 0,5 bar au minimum et/ou de 110 bars au maximum.

14. Système de mesure de débit selon l'une des revendications précédentes, dans lequel au moins huit et de préférence exactement huit trous (19) pour des moyens de fixation sont prévus sur la bride de sortie (17) et de préférence également sur la bride d'entrée (16) en étant répartis autour du canal à fluide (15).
